# EUROPEAN PATENT SPECIFICATION

(11) **EP 3 661 305 B1**
(45) Date of publication and mention of the grant of the patent: **20.12.2023**
(21) Application number: 18839020.7
(22) Date of filing: 13.06.2018
(51) Int. Cl.: H04W 72/12, H04W 48/14

(54) **SYSTEM INFORMATION ACQUISITION METHOD, TRANSMISSION CONTROL METHOD AND RELATED DEVICE**
VERFAHREN ZUR ERFASSUNG VON SYSTEMINFORMATIONEN, ÜBERTRAGUNGSSTEUERUNGSVERFAHREN UND ZUGEHÖRIGE VORRICHTUNG
PROCÉDÉ D'ACQUISITION D'INFORMATIONS SYSTÈME, PROCÉDÉ DE COMMANDE DE TRANSMISSION ET DISPOSITIF ASSOCIÉ

(30) Priority: 26.07.2017 CN 201710620041
(43) Date of publication of application: 03.06.2020
(73) Proprietor: Vivo Mobile Communication Co., Ltd., Dongguan, Guangdong 523860 (CN)
(72) Inventor: WU, Yumin, Dongguan Guangdong 523860 (CN)
(74) Representative: Winter, Brandl - Partnerschaft mbB
(86) International application number: PCT/CN2018/091041
(87) International publication number: WO 2019/019830

(56) References cited:
- CN-A- 106 714 272
- CN-A- 106 788 881
- CN-A- 106 793 140
- US-A1- 2016 192 323
- HUAWEI ET AL: "On demand SI acquisition and failure handling", 3GPP DRAFT; R2-1706768 ON DEMAND SI ACQUISITION AND FAILURE HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Qingdao, China; 20170627 - 20170629 26 June 2017 (2017-06-26), XP051301267, Retrieved from the Internet: URL:http://www.3gpp.org/ftp/Meetings_3GPP_ SYNC/RAN2/Docs/ [retrieved on 2017-06-26]
- VIVO: "Other SI request and delivery", 3GPP DRAFT; R2-1704585_OTHER SI REQUEST AND DELIVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275140, Retrieved from the Internet: URL:http://www.3gpp.org/ftp/Meetings_3GPP_ SYNC/RAN2/Docs/ [retrieved on 2017-05-14]
- OPPO: "Discussion on Remaining Issues of Other SI Design", 3GPP DRAFT; R2-1700045-DISCUSSION ON REMAINING ISSUES OF OTHER SI DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Spokane, USA; 20170117 - 20170119 17 January 2017 (2017-01-17), XP051210632, Retrieved from the Internet: URL:http://www.3gpp.org/ftp/Meetings_3GPP_ SYNC/RAN2/Docs/ [retrieved on 2017-01-17]
- LG ELECTRONICS INC: "Efficient SI request for other SI", 3GPP DRAFT; R2-168738 EFFICIENT SI REQUEST FOR OTHER SI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051178286, Retrieved from the Internet: URL:http://www.3gpp.org/ftp/Meetings_3GPP_ SYNC/RAN2/Docs/ [retrieved on 2016-11-13]
- NEC ET AL: "Efficiency of On-Demand System Information Broadcast", 3GPP DRAFT; R2-070074, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133190, [retrieved on 2007-01-12]

## Description

### TECHNICAL FIELD

The present disclosure relates to the field of communication technologies, and in particular to a method for obtaining system information, a method for controlling transmission of the system information, and relevant equipment.

### BACKGROUND

In a mobile communication system, such as a Long Term Evolution (LTE) system, a 4^{th} Generation (4G) mobile communication system, and a 5^{th} Generation (5G) mobile communication system, minimum system information (Minimum SI) may be transmitted to a mobile communication terminal by a network device over periodic broadcasts, and on-demand system information (On-demand SI) may be transmitted to a mobile communication terminal by a network device based on a request corresponding to the system information and transmitted by the mobile communication terminal.

That is to say, in existing or future communication systems, some system information is no longer a mandatory delivery item, but at present, there is no relevant solution for the system information that is not required to be delivered. Therefore, it is necessary to propose a solution to the delivery of system information.

Document "ON DEMAND SI ACQUISITION AND FAILURE HANDLING" of HUAWEI ET AL (3GPP DRAFT; R2-1706768 ON DEMAND SI ACQUISITION AND FAILURE HANDLING, 3RD GENERATION PARTNERSHIP PROJECT (3GPP); MOBILE COMPETENCE CENTRE; 650, ROUTE DES LUCIOLES; F-06921 SOPHIA-ANTIPOLIS CEDEX; F, vol. RAN WG2, no. Qingdao, China; 20170627-20170629 26 June 2017 discloses indication for other SI. Proposal 1: it is preferred to just signal a bit that is dynamically changed for indication of whether SIB(s) is broadcast or not, and the indication is broadcast in the form of bitmap. Document "Discussion on Remaining Issues of Other SI Design",3GPP DRAFT; R2-1700045-DISCUSSION ON REMAINING ISSUES OF OTHER SI DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,vol. RAN WG2, no. Spokane, USA; 20170117 - 20170119 17 January 2017, R2-1700045 discloses further details on on-demand SI procedure.

### SUMMARY

A method for obtaining system information, a method for controlling transmission of the system information, and relevant equipment are provided according to the appended set of claims.

In a first aspect, an embodiment of the present disclosure provides a method for obtaining system information according to claim 1.

In a second aspect, an embodiment of the present disclosure further provides a mobile communication terminal according to claim 6.

In a third aspect, the present invention provides a computer-readable storage medium according to claim 13.

### BRIEF DESCRIPTION OF THE DRAWINGS

To better clarify technical solutions of embodiments of the present disclosure, drawings used in description of the embodiments are briefly introduced hereinafter. Apparently, the described drawings merely illustrate a part of the disclosed embodiments. A person of ordinary skill in the art can obtain other drawings based on the described drawings without creative efforts.
FIG. 1 is a flowchart of a method for obtaining system information according to an embodiment of the present disclosure;
FIG. 2 is a schematic diagram of communication interaction between a network device and a mobile communication terminal according to an embodiment of the present disclosure;
FIG. 3 is a flowchart of a method for controlling transmission of system information according to a non-claimed embodiment of the present disclosure;
FIG. 4 is a structural diagram of a mobile communication terminal according to an embodiment of the present disclosure;
FIG. 5 is a structural diagram of another mobile communication terminal according to an embodiment of the present disclosure;
FIG. 6 is a structural diagram of another mobile communication terminal according to an embodiment of the present disclosure;
FIG. 7 is a structural diagram of another mobile communication terminal according to an embodiment of the present disclosure;
FIG. 8 is a structural diagram of another mobile communication terminal according to an embodiment of the present disclosure;
FIG. 9 is a structural diagram of another mobile communication terminal according to an embodiment of the present disclosure;
FIG. 10 is a structural diagram of another mobile communication terminal according to an embodiment of the present disclosure;
FIG. 11 is a structural diagram of another mobile communication terminal according to an embodiment of the present disclosure;
FIG. 12 is a structural diagram of a network device according to a non-claimed embodiment of the present disclosure;
FIG. 13 is a structural diagram of another mobile communication terminal according to an embodiment of the present disclosure; and
FIG. 14 is a structural diagram of a network device according to a non-claimed embodiment of the present disclosure.

### DETAILED DESCRIPTION

Technical solutions in embodiments of the present disclosure will be clearly and completely described below with reference to the accompanying drawings in the embodiments of the present disclosure. Obviously, the described embodiments are part of the embodiments of the present disclosure, but not all of them. Based on the embodiments in the present disclosure, all other embodiments obtained by a person of ordinary skill in the art without creative efforts shall fall within the protection scope of the present disclosure.

In the embodiments of the present disclosure, a method for obtaining system information and a method for controlling transmission of the system information may be applied to systems such as LTE, 4G, or 5G systems. Specifically, the method for obtaining system information is applied to a mobile communication terminal in the system, and the method for controlling transmission of system information is applied to a network device in the system. Mobile communication terminals may communicate with network devices over a network. The mobile communication terminal can be a mobile phone, a tablet personal computer, a laptop computers, a personal digital assistant (PDA), a mobile internet device (MID) or a wearable device. The network device can be a base station (NodeB, NB), or an evolutional base station (evolutional Node B, eNB, or eNodeB) in LTE, or a relay station or an access point, or a base station (gNB) in a 5G network, or a wireless network controller at a network side, which are not limited herein.

In the embodiments of the present disclosure, a mobile communication terminal transmits demand information corresponding to system information to a network device only when determining that the trigger condition is satisfied; and after receiving the demand information, the network device controls transmission of the system information according to the demand information, thereby standardizing the request and transmission of system information.

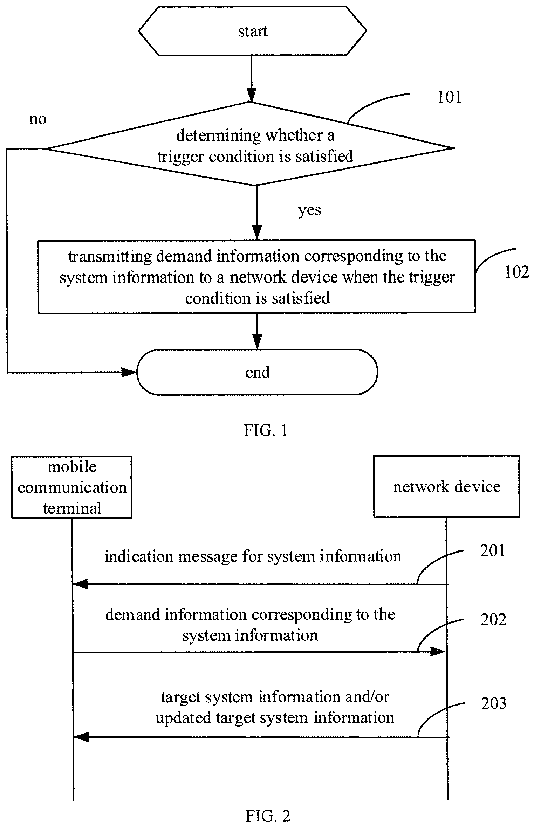

Reference is made to FIG. 1, which is a flowchart of a method for obtaining system information according to an embodiment of the present disclosure. As shown in FIG. 1, the method includes the following steps.

Step 101: determining whether a trigger condition is satisfied.

In an embodiment of the present disclosure, a mobile communication terminal may determine whether the trigger condition is satisfied according to at least one of a protocol or a policy stored in advance, or system information transmitted by a network device. The system information transmitted by the network device is used to indicate system information that is transmitted by the network device only in a case that the mobile communication terminal transmits a request in advance.

In a case that the trigger condition is satisfied, step 102 may be performed; and in a case that the trigger condition is not satisfied, the process may be terminated, or step 101 may be repeatedly performed, which is not limited herein.

Step 102: transmitting demand information corresponding to the system information to a network device when the trigger condition is satisfied.

In this step, the trigger condition is satisfied in at least one of following cases:
a case where the mobile communication terminal requires at least one piece of system information;
a case where the mobile communication terminal does not require at least one piece of system information;
a case where system information transmitted by the network device does not include system information required by the mobile communication terminal;
a case where system information stored by the mobile communication terminal is invalid; or
a case where a first timer configured to prohibit transmitting the demand information or a second timer configured to prohibit transmitting the demand information is in an off state, where the first timer corresponds to the mobile communication terminal, and the second timer corresponds to the system information.

The above timers are explained as follows.

In a specific embodiment of the present disclosure, a timer may be set to implement periodic transmission of the demand information and control a transmission interval of the demand information. In a specific embodiment of the present disclosure, the mobile communication terminal may set a timer general for all system information transmitted based on demands, that is, a first timer corresponding to the mobile communication terminal. In this case, the terminal may transmit demand information for all the system information at certain intervals. System information is diverse, and in order to improve flexibility, in a specific embodiment of the present disclosure, it is also possible to set corresponding timers for every pieces of system information or every types of system information, respectively. In this case, demand information corresponding to different pieces of system information or demand information corresponding to different types of system information is transmitted under control of respective timers. For example, timers can be set long for some pieces or types of system information, and some system information timers can be set short for other pieces or types of system information.

Each trigger condition is explained below.

When the trigger condition is satisfied in the case where the mobile communication terminal requires at least one piece of system information, an operation of transmitting the demand information corresponding to the system information to the network device may be triggered.

An example of the system information including system information A, system information B, system information C, and system information D is given in the following.

In a case that the mobile communication terminal requires the system information A, but does not require the system information B, the system information C and the system information D, demand information corresponding to system information A may be transmitted to the network device, since the number of pieces of system information required by the mobile communication terminal is less than the number of pieces of unnecessary system information. In this case, the demand information is used to indicate the system information A required by the mobile communication terminal, so that the network device transmits at least one of the system information A or updated system information A to the mobile communication terminal according to the demand information. Through the above processes, the network device can transmit the system information required by the mobile communication terminal (i.e., target system information that the mobile communication terminal wants to obtain) to the mobile communication terminal, which meets the needs of the mobile communication terminal.

In a case that the mobile communication terminal does not require the system information A, but requires the system information B, the system information C, and the system information D, demand information for indicating that the system information A is not required may be transmitted to the network device, since the number of pieces of system information required by the mobile communication terminal is greater than the number of pieces of unnecessary system information. In this case, since the demand information indicates the system information A that the mobile communication terminal does not require, the network device may prohibit transmitting the system information A to the mobile communication terminal according to the demand information, or may transmit the system information B, the system information C, and the system information D, after excluding the system information A from all the system information.

Through the above processes, the network device may not transmit system information that is not required by the mobile communication terminal to the mobile communication terminal, which standardizes the request and transmission of system information. In addition, in a case that the number of pieces of system information required by the mobile communication terminal is greater than the number of pieces of the system information that is not required, the transmitting the demand information indicating the system information that is not required by the mobile communication terminal to the network device can reduce signaling overhead of demand information and save the channel bandwidth, as compared with transmitting the demand information indicating the system information required by the mobile communication terminal to the network device.

When the trigger condition is satisfied in the case where the mobile communication terminal does not require at least one piece of system information, the demand information corresponding to the at least one piece of system information may be transmitted to the network device. It should be noted that the not requiring at least one piece of system information can include, but not limited to, two states: one is that the at least one piece of system information is not required by the mobile communication terminal; and the other is that the mobile communication terminal changes from the requiring to the not requiring, that is, the mobile communication terminal does not require the at least one piece of system information again.

An example of the system information including system information A, system information B, system information C, and system information D is given in the following.

In a case that the mobile communication terminal requires the system information A, but does not require the system information B, the system information C and the system information D, demand information for indicating the system information A required by the mobile communication terminal may be transmitted to the network device, since the number of pieces of system information that the mobile communication terminal does not require is greater than the number of system information required by the mobile communication terminal. In this case, the demand information is used to indicate the system information A required by the mobile communication terminal, so that the network device transmits the system information A according to the demand information, and/or updated system information A to the mobile communication terminal.

Through the above processes, the network device can transmit the system information required by the mobile communication terminal (i.e., target system information that the mobile communication terminal expects to obtain) to the mobile communication terminal, which standardizes the request and transmission of system information, and satisfies demands of the mobile communication terminal. In addition, in a case that the number of pieces of system information not required by the mobile communication terminal is greater than the number of pieces of required system information, the transmitting the demand information indicating the system information required by the mobile communication terminal to the network device can effectively reduce the information amount of the demand information, thereby saving a channel bandwidth, as compared with transmitting the demand information indicating the system information not required by the mobile communication terminal to the network device.

In a case that the mobile communication terminal does not require the system information A, but requires the system information B, the system information C, and the system information D, demand information for indicating that the system information A is not required by the mobile communication terminal may be transmitted to the network device, since the number of pieces of system information that the mobile communication terminal does not require is less than the number of pieces of system information required by the mobile communication terminal. In this case, since the demand information indicates the system information A that the mobile communication terminal does not require, the network device may prohibit transmitting the system information A to the mobile communication terminal according to the demand information, or may transmit the system information B, the system information C, and the system information D, after excluding the system information A from all the system information.

Through the above processes, the network device may not transmit system information not required by the mobile communication terminal to the mobile communication terminal, thereby standardizing the request and transmission of system information and meeting the needs of the mobile communication terminal.

When the trigger condition is satisfied in the case where the system information transmitted by the network device does not include the system information required by the mobile communication terminal, demand information corresponding to the required system information may be transmitted to the network device. An example is given below that the system information transmitted by the network device includes system information A, system information B and system information C, while the system information required by the mobile communication terminal is system information D.

After receiving the system information transmitted by the network device, the mobile communication terminal parses the system information to determine that a request requires to be transmitted in advance to enable the network device to transmit the system information A, the system information B, and the system information C; and transmits demand information corresponding to the system information D when determined that the system information transmitted by the network device does not include the system information D required by the mobile communication terminal. In this case, the demand information is used to indicate the system information D required by the mobile communication terminal, so that the network device transmits the system information D according to the demand information and/or updated system information D to the mobile communication terminal. In such a manner, the network device can transmit the system information required by the mobile communication terminal to the mobile communication terminal, that is, the target system information that the mobile communication terminal desires to obtain, thereby standardizing the request and transmission of system information.

Of course, the mobile communication terminal determines which piece or type of system information is transmitted by the network side can be implemented in any manner in the related art, which is not described herein one by one.

When the trigger condition is satisfied in the case where the system information stored by the mobile communication terminal is invalid, demand information corresponding to the invalid system information may be transmitted to the network device. Specifically, the mobile communication terminal may determine that the stored system information is invalid according to updated indication information carried in a paging message transmitted by the network device; it may also determine that the stored system information is invalid according to validity indication information; or it may also determine that the stored system information is invalid when a time duration between the last update time of the system information and the current time is greater than a preset update time duration.

In this application scenario, that the system information A stored in the mobile communication terminal is invalid is given as an example for explanation. In a case that the mobile communication terminal determines that the system information A becomes invalid, the mobile communication terminal may transmit the demand information corresponding to the system information A to the network device. In this case, the demand information is used to indicate the system information A required by the mobile communication terminal and the validity of the system information A, so that the network device transmits the system information A and/or updated system information A to the mobile communication terminal according to the demand information. In this way, the network device can transmit the system information required by the mobile communication terminal to the mobile communication terminal, that is, target system information that the mobile communication terminal wants to obtain, thereby standardizing the request and transmission of system information.

When the trigger condition is satisfied in the case where a first timer is in an off state, demand information corresponding to system information may be transmitted to a network device. In this application scenario, the mobile communication terminal is provided with a timer for prohibiting transmission of a system information request, when the timer is in an off state, the mobile communication terminal can transmit the demand information corresponding to the system information to the network device; and when the timer is in an on state, the mobile communication terminal cannot transmit the demand information corresponding to the system information to the network device. In this way, the mobile communication terminal can determine whether to transmit the demand information corresponding to the system information to the network device by controlling the timer to be started or stopped, which can prevent the mobile communication terminal from frequently transmitting the demand information corresponding to the system information to the network device, thereby saving a channel bandwidth.

When the trigger condition is satisfied in the case where a second timer is in an off state, demand information corresponding to system information may be transmitted to the network device. In this application scenario, the mobile communication terminal may set one timer or at least two timers, and the number of timers may correspond to the number of pieces of system information in one-to-one manner, so that the mobile communication terminal can determine whether to transmit the demand information corresponding to system information corresponding to each of the timers to the network device according to an on or off state of the timer corresponding to the system information. In this way, the mobile communication terminal can determine whether to transmit the demand information corresponding to the system information corresponding to each timer to the network device by controlling the timer corresponding to the system information to be started or stopped, which can prevent the mobile communication terminal from frequently transmitting the demand information corresponding to the system information corresponding to the timer to the network device, thereby saving a channel bandwidth. In addition, a case where a plurality of timers is set for at least two pieces of system information is different from the case where one timer is set, and the former can improve the flexibility of transmission of demand information by the mobile communication terminal.

It should be noted that, in the embodiments of the present disclosure, the satisfied trigger condition includes, but not limited to, the above cases, and can be any combination of the above cases. For example, the satisfied trigger condition may include the case where the mobile communication terminal requires at least one piece of system information and the case where the system information stored in the mobile communication terminal is invalid; or the satisfied trigger condition may include the case where the system information transmitted by the network device does not include the system information required by the mobile communication terminal and the case where the first timer is in an off state, which is not limited herein.

In this step, the demand information corresponding to the system information may involve required system information, or unnecessary system information, or a set of required system information and unnecessary system information, or a set of required system information and valid information of the system information, which is not limited hereto.

Different types of content included in the demand information may be carried in different fields. Optionally, the demand information includes: a first field for indicating first system information that is not required by the mobile communication terminal; or the second field for indicating second system information that is required by the mobile communication terminal, so as to achieve effective utilization of a network bandwidth.

Optionally, in a case that the demand information includes a second field, the demand information further includes: a third field for indicating a validity of the second system information. When the demand information includes the third field, the network device may determine the specific content to be transmitted to the mobile communication terminal according to the validity of the second system information. As an example, when detecting that the second system information is valid, the network device transmits the updated second system information to the mobile communication terminal; and when detecting that the second system information is invalid, the network device transmits the second system information and updated second system information to the mobile communication terminal. Therefore, the accuracy of the mobile communication terminal in obtaining the target system information can be improved, while improving the efficiency of the mobile communication terminal in obtaining the target system information.

The third field may be represented by one bit. Specifically, when a value of the bit is "1", the second system information is valid; and when the value of the bit is "0", the second system information is invalid. Optionally, a length of the third field is greater than or equal to 2 bits, for example, a value tag (value Tag). The validity of the second system information being represented by at least 2 bits can increase flexibility, as compared with the third field being represented by one bit.

In this step, the mobile communication terminal can transmit the demand information corresponding to the system information to the network device through an uplink common control channel (CCCH) or an uplink dedicated control channel (DCCH). Optionally, the transmitting the demand information corresponding to the system information to the network device specifically includes: transmitting, via the uplink CCCH, the demand information corresponding to the system information to the network terminal in a case that the mobile communication terminal is in an inactive mode or in an idle mode; and transmitting, via the uplink DCCH, the demand information corresponding to the system information to the network terminal in a case that the mobile communication terminal is in an connected mode.

In an embodiment of the present disclosure, an interest message may be carried in an uplink message in the related technology and transmitted by a mobile communication terminal, or may be carried in a request message newly created by the mobile communication terminal and transmitted by the mobile communication terminal, but is not limited hereto.

Optionally, the uplink message may be a request message for radio resource control (RRC) connection establishment, or a request message for RRC connection resumption, or a request message for RRC connection re-establishment, which is not limited hereto.

In the method for obtaining system information according to the embodiments, whether a trigger condition is satisfied is determined for transmitting demand information corresponding to system information by a mobile communication terminal, and the demand information corresponding to the system information is transmitted to a network device when the trigger condition is satisfied, so that the network device controls the transmission of the system information according to the demand information transmitted by the network device, thereby standardizing the obtaining of system information and the controlling of transmission of the system information.

Optionally, the satisfied trigger condition includes the case where the first timer is in an off state, and after transmitting the demand information corresponding to the system information to the network device, the method further includes starting the first timer; or the satisfied trigger condition includes the case where the second timer is in an off state, and after transmitting the demand information corresponding to the system information to the network device, the method further includes starting the second timer.

In this embodiment, after the demand information corresponding to the system information is transmitted to the network device, when the trigger condition for transmitting the demand information by the mobile communication terminal is satisfied in the case where the first timer is in an off state, the first timer is started, to prevent the mobile communication terminal from frequently transmitting the demand information corresponding to the system information to the network device, which can save a channel bandwidth and reduce the operating load of the network device.

After transmitting the demand information corresponding to the system information to the network device, when the trigger condition for transmitting the demand information by the mobile communication terminal is satisfied in the case where the second timer is in an off state, the second timer is started, to prevent the mobile communication terminal from frequently transmitting the demand information corresponding to the system information to the network device, which can save a channel bandwidth and reduce the operating load of the network device.

In addition, after the second timer is started, if the other second timer is in an off state, the mobile communication terminal can still transmit, to the network device, demand information corresponding to system information corresponding to the timer in an off state, thereby improving the flexibility of the mobile communication terminal transmitting demand information.

It should be noted that, for the content included in the demand information in this embodiment, reference may be made to the description of the system information in the method embodiment in FIG. 1. To avoid repetition, details are not described herein again.

Optionally, after the first timer is started, the method further includes: stopping the first timer in a case that the mobile communication terminal initiates a handover process, a connection establishment process, a connection re-establishment process, or a state transition process. Optionally, after the second timer is started, the method further includes: stopping the second timer in a case that the mobile communication terminal initiates a handover process, a connection establishment process, a connection re-establishment process, or a state transition process.

In this step, in the case that the mobile communication terminal initiates the handover process, the connection establishment process, the connection re-establishment process, or the state transition process, the first timer being in an on state may prevent the mobile communication terminal from requesting the network side for system information required by the above-mentioned processes, thereby causing the above processes unable to be executed.

In order to ensure the smooth execution of the above processes, the terminal should be allowed to request the system information required by the above processes from the network side, that is, the timers in an on state, including the first timer and the second timer, should be stopped. The state transition process may be a state transition of the mobile communication terminal between an idle state, an inactive state, and a connected state.

In the above manners, the adverse influence of the timer for prohibiting transmission of a system information request on the mobile communication terminal can be avoided.

Optionally, after transmitting the demand information corresponding to the system information to the network device, the method further includes: receiving target system information required by the mobile communication terminal, and/or the target system information as updated, where the target system information is determined according to the demand information and transmitted by the network device.

In this step, in a case that the demand information includes a first field for indicating first system information that is not required by the mobile communication terminal, the network device may prohibit transmitting the first system information to the mobile communication terminal.

In a case that the demand information includes a second field for indicating second system information that is required by the mobile communication terminal, the network device may transmit the second system information and/or updated second system information to the mobile communication terminal, so that the mobile communication terminal receives the second system information and/or the updated second system information.

In a case that the demand information includes a second field and a third field, the second field is used to indicate second system information required by the mobile communication terminal, and the third field is used to indicate a validity of the second system information, the network device may transmit updated second system information to the mobile communication terminal when the third field indicates that the second system information is valid, so that the mobile communication terminal receives the updated second system information; or the network device may transmit the second system information and the updated second system information to the mobile communication terminal when the third field indicates that the second system information is invalid, so that the mobile communication terminal receives the second system information and the updated second system information.

In practical applications, a network device may determine that the mobile communication terminal has not stored valid system information when detecting that validity information of the second system information transmitted by the mobile communication terminal is different from validity information corresponding to the system information transmitted by the network device.

To facilitate understanding, as shown in FIG. 2, communication interaction processes between the network device and the mobile communication terminal may be as follows:
step 201: the network device transmitting an indication message for system information to the mobile communication terminal in advance, the indication message for the system information used to indicate system information transmitted only based on a request from the mobile communication terminal, where which system information transmitted only based on a request from the mobile communication terminal can be stored in the mobile communication terminal in advance;
step 202: transmitting demand information corresponding to the system information to the network device when determining the trigger condition is satisfied; and
step 203: after receiving the demand information, the network device transmitting, according to the demand information, target system information required by the mobile communication terminal and/or updated target system information to the mobile communication terminal.

Of course, in other embodiments, step 201 may be omitted, that is, the mobile communication terminal may determine whether the trigger condition is satisfied based on a protocol or a configuration.

The target system information required by the mobile communication terminal and/or the updated target system information may be carried in a broadcast message, it may also be carried in a feedback message of a request message of the mobile communication terminal, and it may also be carried in a configuration message. For example, in a radio resource control connection re-establishment request message (RRC Connection Reconfiguration) transmitted by the network device to the mobile communication terminal, but it is not limited to these.

In the above manners, the mobile communication terminal receives the target system information and/or the updated target system information required by the mobile communication terminal and transmitted by the network device according to the demand information.

Optionally, the transmitting the demand information corresponding to the system information to the network device when the trigger condition is satisfied specifically includes:
determining whether the mobile communication terminal requires to transmit an uplink message when the trigger condition is satisfied; and
transmitting, to the network terminal, an uplink message carrying the demand information corresponding to the system information, in a case that the mobile communication terminal requires to transmit the uplink message; or otherwise, generating a request message carrying the demand information and transmitting the request message to the network device.

In this step, when the mobile communication terminal requires to transmit an uplink message, the mobile communication terminal transmits the uplink message carrying the demand information corresponding to the system information to the network terminal; and when the mobile communication terminal does not require to transmit the uplink message, the mobile communication terminal generates a request message carrying the demand information corresponding to the system information, and transmits the uplink message to the network device.

In the above manner, when the mobile communication terminal needs to transmit an uplink message, the mobile communication terminal transmits the uplink message carrying the demand information corresponding to the system information to the network terminal, which can reduce the signaling overhead, realize the reuse of existing messages, and save a channel bandwidth.

Optionally, the transmitting the demand information corresponding to the system information to the network device when the trigger condition is satisfied specifically includes:
generating a request message carrying the demand information corresponding to the system information when the trigger condition is satisfied;
determining whether the mobile communication terminal requires to transmit an uplink message; and
transmitting an uplink message carrying the demand information to the network device and deleting the request message in a case that the mobile communication terminal requires to transmit the uplink message, or otherwise, transmitting the request message to the network side.

In this step, when the trigger condition is satisfied, the mobile communication terminal generates a request message carrying the demand information corresponding to the system information and stores it in a queue; then determines whether the mobile communication terminal needs to transmit an uplink message; when the mobile communication terminal needs to transmit the uplink message, transmits an uplink message carrying the demand information to the network device, and deletes the request message; and when the mobile communication terminal does not need to transmit the uplink message, directly transmits the request message in the message queue to the network side.

In the above manner, when the mobile communication terminal needs to transmit the uplink message, the mobile communication terminal transmits the uplink message carrying the demand information corresponding to the system information to the network terminal and deleting the request message carrying the demand information corresponding to the system information, which can reduce the signaling overhead, and saves a channel bandwidth.

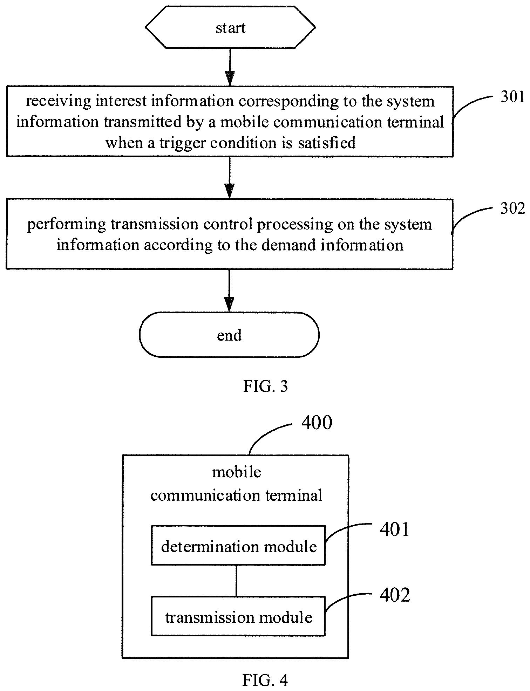

Reference is made to FIG. 3, which is a flowchart of a method for controlling transmission of system information according to an embodiment of the present disclosure. The method for controlling transmission of system information provided by an embodiment of the present disclosure is applied to a network device, and includes the following steps as shown in FIG. 2.

Step 301: receiving demand information corresponding to the system information transmitted by a mobile communication terminal when a trigger condition is satisfied.

It should be noted that this embodiment is an implementation manner of the network device corresponding to the foregoing embodiments. Therefore, the description about "demand information corresponding to the system information transmitted by a mobile communication terminal when a trigger condition is satisfied" in this embodiment can be referred to the related descriptions of the foregoing embodiments, which is not repeated herein to avoid repeated descriptions.

Step 302: performing transmission control processing on the system information according to the demand information.

In this step, the network device performs transmission control processing on the system information according to the demand information, so as to deliver the target system information required by the mobile communication terminal and/or updated target system information to the mobile communication terminal, thereby improving the efficiency of the mobile communication terminal in obtaining the target system information.

Optionally, the demand information includes a first field for indicating first system information that is not required by the mobile communication terminal, and the performing transmission control processing on the system information according to the demand information includes: prohibiting transmitting the first system information to the mobile communication terminal.

Optionally, the demand information includes a second field for indicating second system information that is required by the mobile communication terminal, and the performing transmission control processing on the system information according to the demand information includes: transmitting at least one of the second system information or updated second system information to the mobile communication terminal.

Optionally, the demand information includes a second field and a third field, the second field is used to indicate second system information required by the mobile communication terminal, and the third field is used to indicate a validity of the second system information; and the performing transmission control processing on the system information according to the demand information includes:
transmitting the updated second system information to the mobile communication terminal, in a case that the third field indicates that the second system information is valid; or
transmitting the second system information and updated second system information to the mobile communication terminal, in a case that the third field indicates that the second system information is invalid.

Optionally, a length of the third field is greater than or equal to 2 bits.

Optionally, the receiving the demand information corresponding to the system information transmitted by the mobile communication terminal when the trigger condition is satisfied includes:
receiving the demand information corresponding to the system information that is transmitted through an uplink common control channel CCCH by the mobile communication terminal in an inactive mode or in an idle mode; or
receiving the demand information corresponding to the system information that is transmitted through an uplink dedicated control channel DCCH by the mobile communication terminal in an connected mode.

Optionally, the receiving the demand information corresponding to the system information transmitted by the mobile communication terminal when the trigger condition is satisfied specifically includes: receiving the demand information carried by an uplink message that is transmitted by the mobile communication terminal.

Optionally, the uplink message is a request message for radio resource control (RRC) connection establishment; or the uplink message is a request message for RRC connection resumption; or the uplink message is a request message for RRC connection re-establishment.

It should be noted that the above embodiments are implementation manners applied to the network device corresponding to the method embodiments in FIG. 1. For specific implementation manners, reference can be made to related descriptions in the method embodiments in FIG. 1. To avoid repetition, details are not described herein again.

In the method for controlling transmission of system information in the embodiments, the network device performs transmission control processing on the system information according to the received demand information corresponding to the system information transmitted by the mobile communication terminal when the trigger condition is satisfied, thereby improving the efficiency of the mobile communication terminal in obtaining the target system information.

Reference is made to FIG. 4, which is a structural diagram of a mobile communication terminal according to an embodiment of the present disclosure. As shown in FIG. 4, the mobile communication terminal 400 includes a determination module 401 and a transmission module 402.

The determination module 401 is configured to determine whether a trigger condition is satisfied. The transmission module 402 is configured to transmit demand information corresponding to system information to a network device when the trigger condition is satisfied.

Optionally, the satisfied trigger condition includes at least one of the following cases:
a case where the mobile communication terminal requires at least one piece of system information;
a case where the mobile communication terminal does not require at least one piece of system information;
a case where system information transmitted by the network device does not include system information required by the mobile communication terminal;
a case where system information stored by the mobile communication terminal is invalid; or
a case where a first timer configured to prohibit transmitting the demand information or a second timer configured to prohibit transmitting the demand information is in an off state, where the first timer corresponds to the mobile communication terminal, and the second timer corresponds to the system information.

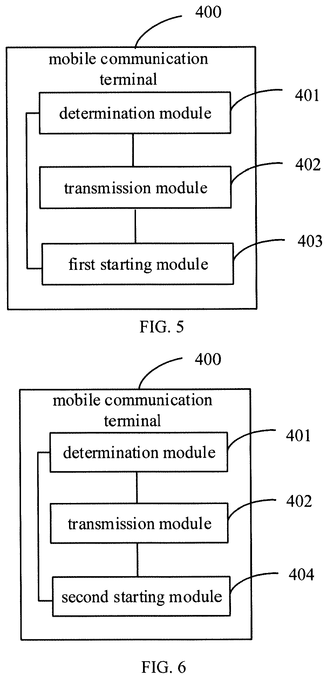

Optionally, the satisfied trigger condition includes the case where the first timer is in an off state, as shown in FIG. 5, the mobile communication terminal 400 further includes: a first starting module 403, configured to start the first timer after transmitting the demand information corresponding to the system information to the network device. Optionally, the satisfied trigger condition includes the case where the second timer is in an off state, as shown in FIG. 6, the mobile communication terminal 400 further includes a second starting module 404, configured to start the second timer after transmitting the demand information corresponding to the system information to the network device.

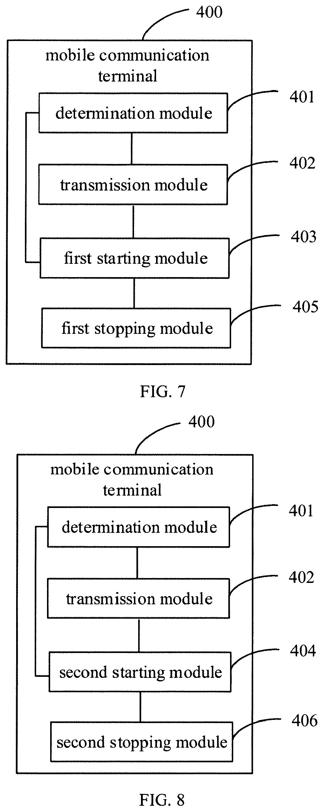

Optionally, as shown in FIG. 7, the mobile communication terminal 400 further includes: a first stopping module 405 configured to, after the first timer is started, stop the first timer in a case that the mobile communication terminal initiates a handover process, a connection establishment process, a connection re-establishment process, or a state transition process.

Optionally, as shown in FIG. 8, the mobile communication terminal 400 further includes: a second stopping module 406 configured to, after the second timer is started, stop the second timer in a case that the mobile communication terminal initiates a handover process, a connection establishment process, a connection re-establishment process, or a state transition process.

Optionally, the demand information includes: a first field for indicating first system information that is not required by the mobile communication terminal; and/or a second field for indicating second system information that is required by the mobile communication terminal.

Optionally, in a case that the demand information includes the second field, the demand information further includes: a third field for indicating a validity of the second system information.

Optionally, a length of the third field is greater than or equal to 2 bits.

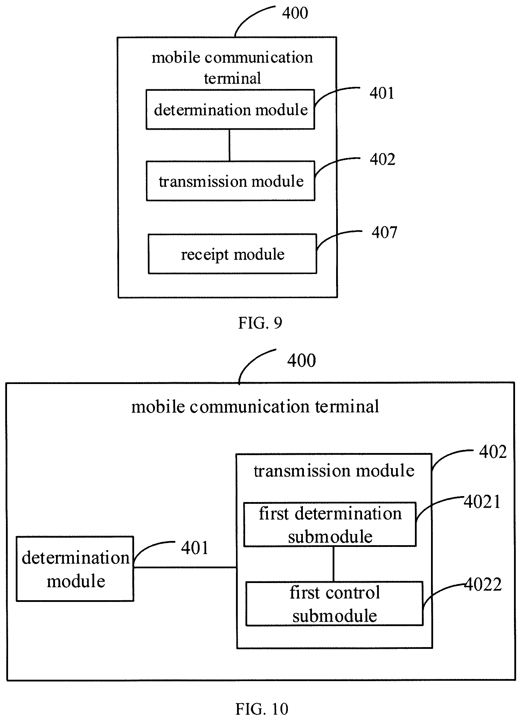

Optionally, as shown in FIG. 9, the mobile communication terminal 400 further includes: a receipt module 407 configured to receive target system information required by the mobile communication terminal, and/or the target system information as updated, after the demand information corresponding to the system information to the network device is transmitted, where the target system information is determined according to the demand information and transmitted by the network device.

Optionally, the transmission module 402 is specifically configured to: transmit the demand information corresponding to the system information to the network device through an uplink common control channel CCCH, in a case that the trigger condition is satisfied, and the mobile communication terminal is in an inactive mode or in an idle mode; and transmit the demand information corresponding to the system information to the network device through an uplink dedicated control channel DCCH, in a case that the trigger condition is satisfied, and the mobile communication terminal is in an connected mode.

Optionally, as shown in FIG. 10, the transmission module 402 includes: a first determination submodule 4021, configured to determine whether the mobile communication terminal requires to transmit an uplink message when the trigger condition is satisfied; and a first control submodule 4022, configured to transmit, to the network terminal, an uplink message carrying the demand information corresponding to the system information, in a case that the mobile communication terminal requires to transmit the uplink message; or generate a request message carrying the demand information, and transmit the request message to the network device, in a case that the mobile communication terminal does not require to transmit the uplink message.

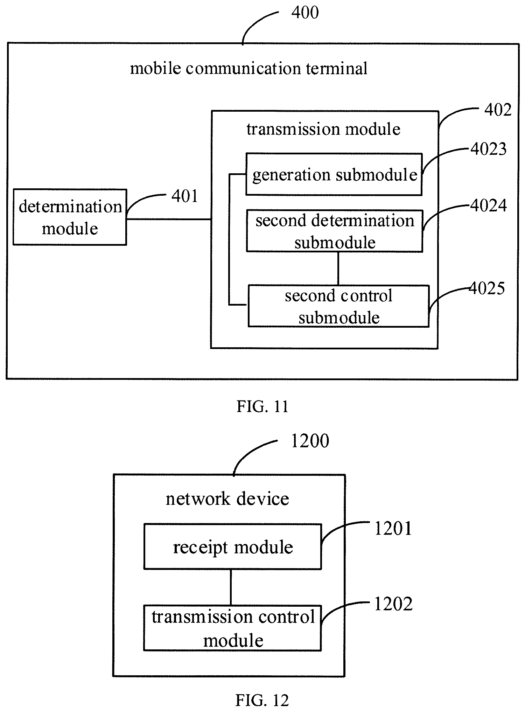

Optionally, as shown in FIG. 11, the transmission module 402 includes:
a generation submodule 4023, configured to generate a request message carrying the demand information corresponding to the system information when the trigger condition is satisfied;
a second determination submodule 4024, configured to determine whether the mobile communication terminal requires to transmit an uplink message; and
a second control submodule 4025, configured to transmit the uplink message carrying the demand information to the network device and delete the request message in a case that the mobile communication terminal requires to transmit the uplink message, and transmit the request message to the network side in a case that the mobile communication terminal does not require to transmit the uplink message.

Optionally, the uplink message is a request message for radio resource control (RRC) connection establishment; or the uplink message is a request message for RRC connection resumption; or the uplink message is a request message for RRC connection re-establishment.

It should be noted that the above-mentioned mobile communication terminal 400 in these embodiments may be a communication device according to any of the method embodiments in the embodiments of the present disclosure, that is, any implementations of the communication device according to the method embodiments in the embodiments of the present disclosure can be implemented by the mobile communication terminal 400 in these embodiments, and the same beneficial effects can be achieved. To avoid repetition, details are not described herein again.

The mobile communication terminal according to the embodiments of the present disclosure determines whether a trigger condition for transmitting demand information corresponding to system information by the mobile communication terminal is satisfied, and when the trigger condition is satisfied, transmits the demand information corresponding to the system information to a network device, so that the network device controls the transmission of the system information according to the demand information transmitted by the network device, thereby standardizing the request and transmission of system information.

Reference is made to FIG. 12, which is a structural diagram of a network device according to an embodiment of the present disclosure. As shown in FIG. 12, the network device 1200 includes: a receipt module 1201 configured to receive demand information corresponding to system information transmitted by a mobile communication terminal when a trigger condition is satisfied; and a transmission control module 1202 configured to perform transmission control processing on the system information according to the demand information.

Optionally, the demand information includes a first field for indicating first system information that is not required by the mobile communication terminal, and the transmission control module 1202 is specifically configured to prohibit transmitting the first system information to the mobile communication terminal.

Optionally, the demand information includes a second field for indicating second system information that is required by the mobile communication terminal, and the transmission control module 1202 is specifically configured to transmit at least one of the second system information or updated second system information to the mobile communication terminal.

Optionally, the demand information includes a second field and a third field, the second field is used to indicate second system information required by the mobile communication terminal, and the third field is used to indicate a validity of the second system information; and the transmission control module 1202 is specifically configured to transmit updated second system information to the mobile communication terminal, in a case that the third field indicates that the second system information is valid; or transmit the second system information and the updated second system information to the mobile communication terminal, in a case that the third field indicates that the second system information is invalid.

Optionally, a length of the third field is greater than or equal to 2 bits.

Optionally, the receipt module 1201 is specifically configured to receive the demand information corresponding to the system information that is transmitted through an uplink common control channel CCCH by the mobile communication terminal in an inactive mode or in an idle mode; or the receipt module 1201 is specifically configured to receive the demand information corresponding to the system information that is transmitted through an uplink dedicated control channel DCCH by the mobile communication terminal in an connected mode.

Optionally, the receipt module 1201 is specifically configured to receive the demand information carried by an uplink message that is transmitted by the mobile communication terminal.

Optionally, the uplink message is a request message for radio resource control (RRC) connection establishment; or the uplink message is a request message for RRC connection resumption; or the uplink message is a request message for RRC connection re-establishment.

It should be noted that the above-mentioned network device 1200 in these embodiments may be a communication device according to any of the method embodiments in the embodiments of the present disclosure, that is, any implementations of the communication device according to the method embodiments in the embodiments of the present disclosure can be implemented by the network device 1200 in these embodiments, and the same beneficial effects can be achieved. To avoid repetition, details are not described herein again.

The network device according to the embodiments of the present disclosure receives the demand information corresponding to the system information that is transmitted by the mobile communication terminal when the trigger condition is satisfied, and performs transmission control processing on the system information, thereby standardizing the request and transmission of the system information.

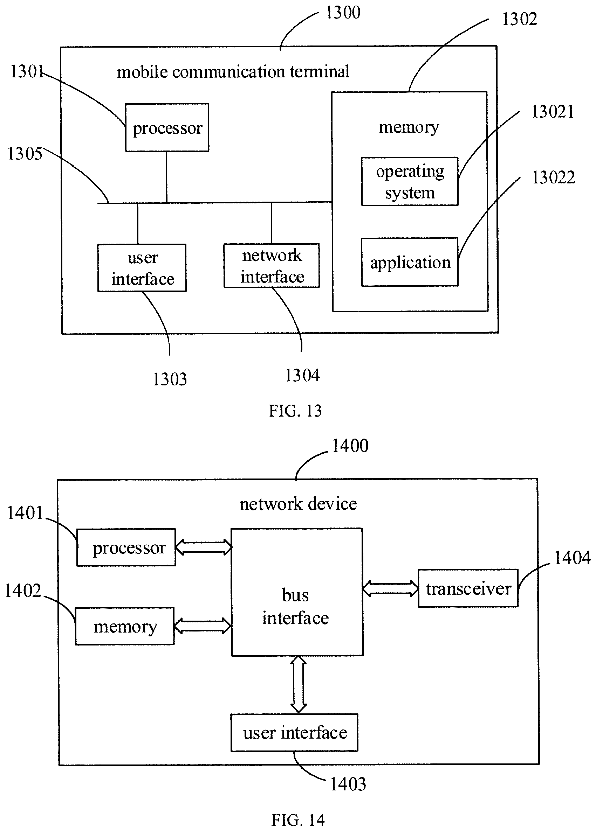

Reference is made to FIG. 13, which is a structural diagram of another mobile communication terminal according to an embodiment of the present disclosure. As shown in FIG. 13, the mobile communication terminal 1300 further includes at least one processor 1301, a memory 1302, at least one network interface 1304, and a user interface 1303. Various modules in the mobile communication terminal 1300 are coupled together through a bus system 1305. It is understandable that the bus system 1305 is configured to implement connections and communications between these components. The bus system 1305 includes a power bus, a control bus, and a signal status bus in addition to a data bus. However, for the sake of clarity, various buses are denoted by the bus system 1305 in FIG. 13.

The user interface 1303 may include a display, a keyboard, or a click device (for example, a mouse, a track ball, a touch pad, or a touch screen).

It can be understood that the memory 1302 in the embodiments of the present disclosure may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile storage may be a random access memory (RAM), which is used as an external cache. By way of example and without any limitation, many forms of RAMs may be used, such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM) and direct Rambus RAM (DRRAM). The memory 1302 of the system and method described in this specification is meant to include, without limitation, these and any other suitable types of memories.

In some implementations, the memory 1302 stores the following elements, an executable module or a data structure, or a subset or extension set thereof, such as an operating system 13021 and an application 13022.

The operating system 13021 includes various system programs, such as a framework layer program, a core library layer program and a driver layer program, to implement various fundamental services and process hardware-based tasks. The application 13022 includes various applications, such as a media player and a browser, to implement a variety of application services. The program implementing the method according to embodiments of the present disclosure may be included in the application 13022.

In an embodiment of the present disclosure, the mobile communication terminal 1300 further includes a computer program stored in the memory 1302 and executable on the processor 1301, and the computer program is executed by the processor 1301 to implement the following steps:
determining whether a trigger condition is satisfied; and
transmitting demand information corresponding to system information to a network device when the trigger condition is satisfied.

The methods disclosed in the foregoing embodiments of the present disclosure may be applied in the processor 1301 or implemented by the processor 1301. The processor 1301 may be an integrated circuit chip with signal processing capabilities. During an implementation process, steps of the methods may be realized in form of hardware by integrated logical circuits in the processor 1301, or in form of software by instructions. The processor 1301 may be a general purpose processor, a digital signal processor (DSP), an application specific integrated circuit (ASIC), a field programmable gate array (FPGA) or other programmable logic devices, a discrete gate or a transistor logic component, a discrete hardware transistor logic component, discrete hardware assembly, that is capable of implementing or executing the various methods, steps and logic block diagrams disclosed in the embodiments of the present disclosure. The general purpose processor may be a microprocessor, or any conventional processor, etc. The steps of the methods disclosed with reference to the embodiments of the present disclosure may be embodied in hardware in the form of a coding processor, or performed by the hardware in the coding processor and the software modules in combination. The software modules may reside in well-established storage medium in the art, such as a RAM, flash memory, ROM, PROM or EEPROM, register, etc. The storage medium resides in the memory 1302. The processor 1301 reads information from the memory 1302 and performs the steps of the methods with its hardware.

It is understood that, the embodiments described in the present disclosure may be implemented by hardware, software, firmware, middleware, microcode or a combination thereof. For hardware implementation, processing units may be implemented in one or more application specific integrated circuits (ASIC), digital signal processor (DSP), DSP device (DSPD), programmable logic device (PLD), field-programmable gate array (FPGA), general purpose processor, controller, microcontroller, microprocessor, other electronic unit configured to perform the function described in this specification or a combination thereof.

For software implementation, the technical solutions described in the embodiments of the present disclosure may be implemented by a module (e.g., process, or function, etc.) configured to perform the function described in the embodiments of the present disclosure. Software code may be stored in a memory and executed by the processor. The memory may be implemented internal or external to the processor.

Optionally, the satisfied trigger condition includes at least one of following cases:
a case where the mobile communication terminal requires at least one piece of system information;
a case where the mobile communication terminal does not require at least one piece of system information;
a case where system information transmitted by the network device does not include system information required by the mobile communication terminal;
a case where system information stored by the mobile communication terminal is invalid; or
a case where a first timer configured to prohibit transmitting the demand information or a second timer configured to prohibit transmitting the demand information is in an off state, where the first timer corresponds to the mobile communication terminal, and the second timer corresponds to the system information.

Optionally, the satisfied trigger condition includes the case where the first timer is in an off state, and after transmitting the demand information corresponding to the system information to the network device, the processor 1301 is further configured to execute the computer program to start the first timer. Optionally, the satisfied trigger condition includes the case where the second timer is in an off state, and after transmitting the demand information corresponding to the system information to the network device, the processor 1301 is further configured to execute the computer program to start the second timer.

Optionally, after starting the first timer, the processor 1301 is further configured to execute the computer program to: stop the first timer in a case that the mobile communication terminal initiates a handover process, a connection establishment process, a connection re-establishment process, or a state transition process. Optionally, after starting the second timer, the processor 1301 is further configured to execute the computer program to: stop the second timer in a case that the mobile communication terminal initiates a handover process, a connection establishment process, a connection re-establishment process, or a state transition process.

Optionally, the demand information includes: a first field for indicating first system information that is not required by the mobile communication terminal; and/or a second field for indicating second system information that is required by the mobile communication terminal.

Optionally, in a case that the demand information includes a second field, the demand information further includes: a third field for indicating a validity of the second system information.

Optionally, a length of the third field is greater than or equal to 2 bits.

Optionally, after transmitting the demand information corresponding to the system information to the network device, the processor 1301 is further configured to execute the computer program to receive target system information required by the mobile communication terminal, and/or the target system information as updated, where the target system information is determined according to the demand information and transmitted by the network device.

Optionally, when transmitting the demand information corresponding to the system information to the network device, the processor 1301 is further configured to execute the computer program to perform the following steps:
transmitting the demand information corresponding to the system information to the network device through an uplink common control channel CCCH, in a case that the mobile communication terminal is in an inactive mode or in an idle mode; or
transmitting the demand information corresponding to the system information to the network device through an uplink dedicated control channel DCCH, in a case that the mobile communication terminal is in an connected mode.

Optionally, when transmitting the demand information corresponding to the system information to the network device when the trigger condition is satisfied, the processor 1301 is further configured to execute the computer program to perform the following steps:
determining whether the mobile communication terminal requires to transmit an uplink message when the trigger condition is satisfied;
transmitting, to the network terminal, an uplink message carrying the demand information corresponding to the system information, in a case that the mobile communication terminal requires to transmit the uplink message; or generating a request message carrying the demand information, and transmitting the request message to the network device, in a case that the mobile communication terminal does not require to transmit the uplink message.

Optionally, when transmitting the demand information corresponding to the system information to the network device when the trigger condition is satisfied, the processor 1301 is further configured to execute the computer program to perform the following steps:
generating a request message carrying the demand information corresponding to the system information when the trigger condition is satisfied;
determining whether the mobile communication terminal requires to transmit an uplink message; and
transmitting an uplink message carrying the demand information to the network device and deleting the request message in a case that the mobile communication terminal requires to transmit the uplink message, and transmitting the request message to the network side in a case that the mobile communication terminal does not require to transmit the uplink message.

Optionally, the uplink message is a request message for radio resource control (RRC) connection establishment; or the uplink message is a request message for RRC connection resumption; or the uplink message is a request message for RRC connection re-establishment.

It should be noted that the above-mentioned mobile communication terminal 1300 in these embodiments may be a communication device according to any of the method embodiments in the embodiments of the present disclosure, that is, any implementations of the communication device according to the method embodiments in the embodiments of the present disclosure can be implemented by the mobile communication terminal 1300 in these embodiments, and the same beneficial effects can be achieved. To avoid repetition, details are not described herein again.

The mobile communication terminal according to the embodiments of the present disclosure determines whether a trigger condition for transmitting demand information corresponding to system information by the mobile communication terminal is satisfied, and when the trigger condition is satisfied, transmits the demand information corresponding to the system information to a network device, so that the network device controls the transmission of the system information according to the demand information transmitted by the network device, thereby standardizing the request and transmission of system information.

Reference is made to FIG. 14, which is a structural diagram of another network device according to an embodiment of the present disclosure. As shown in FIG. 14, the network device 1400 includes a processor 1401, a memory 1402, a user interface 1403, a transceiver 1404, and a bus interface.

In an embodiment of the present disclosure, the network device 1400 further includes: a computer program stored in the memory 1402 and executable on the processor 1401. When executing the computer program, the processor 1401 is configured to perform the following steps:
receiving demand information corresponding to system information transmitted by a mobile communication terminal when a trigger condition is satisfied; and
performing transmission control processing on the system information according to the demand information.

In FIG. 14, a bus architecture may include any number of interconnected buses and bridges, and may be specifically configured to couple various circuits including one or more processors represented by the processor 1401 and storages represented by the memory 1402. The bus architecture may also couple various other circuits such as peripherals, voltage regulators and power management circuits, which are well known in the art. Therefore, a detailed description thereof is omitted herein. A bus interface provides an interface. The transceiver 1404 may be multiple elements, i.e., including a transmitter and a receiver, to allow for communication with various other apparatuses on the transmission medium. For different user equipment, the user interface 1403 may also be an interface capable of may also be an interface capable of externally or internally connecting the required devices, which includes, but not limited to, a keypad, a display, a speaker, a microphone, a joystick, and the like.

The processor 1401 is responsible for the control of the bus architecture and general processing, and the memory 1402 may store data used by the processor 300 in performing operations.

Optionally, the demand information includes a first field for indicating first system information that is not required by the mobile communication terminal, and when performing transmission control processing on the system information according to the demand information, the processor 1401 is configured to execute the computer program to prohibit transmitting the first system information to the mobile communication terminal.

Optionally, the demand information includes a second field for indicating second system information that is required by the mobile communication terminal, and when performing transmission control processing on the system information according to the demand information, the processor 1401 is configured to execute the computer program to transmit at least one of the second system information or updated second system information to the mobile communication terminal.

Optionally, the demand information includes a second field and a third field, the second field is used to indicate second system information required by the mobile communication terminal, and the third field is used to indicate a validity of the second system information; and when performing transmission control processing on the system information according to the demand information, the processor 1401 is configured to execute the computer program to perform the following steps:
transmitting the updated second system information to the mobile communication terminal, in a case that the third field indicates that the second system information is valid; or
transmitting the second system information and the updated second system information to the mobile communication terminal, in a case that the third field indicates that the second system information is invalid.

Optionally, a length of the third field is greater than or equal to 2 bits.

Optionally, the processor 1401 is configured to execute the computer program to perform the following steps:
receiving the demand information corresponding to the system information that is transmitted through an uplink common control channel CCCH by the mobile communication terminal in an inactive mode or in an idle mode; or
receiving the demand information corresponding to the system information that is transmitted through an uplink dedicated control channel DCCH by the mobile communication terminal in an connected mode.

Optionally, when receiving the demand information corresponding to the system information transmitted by the mobile communication terminal when the trigger condition is satisfied, the processor 1401 is further configured to execute the computer program to receive the demand information carried by an uplink message from the mobile communication terminal.

Optionally, the uplink message is a request message for radio resource control (RRC) connection establishment; or the uplink message is a request message for RRC connection resumption; or the uplink message is a request message for RRC connection re-establishment.

It should be noted that the above-mentioned network device 1400 in these embodiments may be a communication device according to any of the method embodiments in the embodiments of the present disclosure, that is, any implementations of the communication device according to the method embodiments in the embodiments of the present disclosure can be implemented by the network device 1400 in these embodiments, and the same beneficial effects can be achieved. To avoid repetition, details are not described herein again.

The network device according to the embodiments of the present disclosure receives the demand information corresponding to the system information transmitted by the mobile communication terminal when the trigger condition is satisfied, and performs transmission control processing on the system information, thereby standardizing the request and transmission of the system information.

An embodiment of the present disclosure further provides a computer-readable storage medium, on which a computer program is stored. When the computer program is executed by a processor, various processes of the method for obtaining system information in the above embodiments are implemented, which can achieve the same technical effects, and will be not repeated herein to avoid repetition. The computer-readable storage medium is, for example, a read-only memory (ROM), a random access memory (RAM), a magnetic disk or an optical disk.

An embodiment of the present disclosure further provides a computer-readable storage medium, and a computer program is stored thereon. When the computer program is executed by a processor, various processes of the method for controlling transmission of system information in the above embodiments are implemented, which can achieve the same technical effects, and will be not repeated herein to avoid repetition. The computer-readable storage medium is, for example, a read-only memory (ROM), a random access memory (RAM), a magnetic disk or an optical disk.

A person skilled in the art may be aware that, the exemplary units and algorithm steps described in connection with the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be neglected or not performed. In addition, the displayed or discussed mutual couplings or direct couplings or communication connections may be implemented through some interfaces. The indirect couplings or communication connections between the devices or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments of the present disclosure.

In addition, functional units in the embodiments of the present disclosure may be integrated into one processing unit, or each of the units may exist alone physically, or two or more units may be integrated into one unit.

If the functions are implemented in a form of a software functional unit and sold or used as an independent product, the functions may be stored in a computer-readable storage medium. Based on such an understanding, essential part or the part contributing to the prior art of the technical solutions of the present disclosure, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that may store program code, such as a universal serial bus (USB) flash drive, a mobile hard disk, an ROM, an RAM, a magnetic disk, or an optical disc.

The above descriptions are merely specific implementations of the present disclosure, but the scope of the present disclosure is not limited thereto. Any modifications and substitutions easily made by a person of ordinary skill in the art without departing from the technical principle of the present disclosure shall fall within the scope of the present disclosure. Therefore, the scope of the present disclosure shall be determined by the claims.

## Claims

1. A method for obtaining system information, applied to a mobile communication terminal, wherein the method comprises:
determining (101) whether a trigger condition is satisfied; and
**characterized by** that the method further comprises:
transmitting (102) demand information corresponding to the system information to a network device when the trigger condition is satisfied, wherein the system information is on-demand system information,
wherein the demand information comprises at least one of:
a first field for indicating first system information that is not required by the mobile communication terminal; and
a second field for indicating second system information that is required by the mobile communication terminal,
wherein in a case that the demand information comprises the second field, the demand information further comprises: a third field for indicating a validity of the second system information,
wherein the satisfied trigger condition comprises a case where a first timer configured to prohibit transmitting the demand information is in an off state, the first timer corresponds to the mobile communication terminal, and after transmitting (102) the demand information corresponding to the system information to the network device, the method further comprises starting the first timer; or
the satisfied trigger condition comprises a case where a second timer configured to prohibit transmitting the demand information is in an off state, the second timer corresponds to the system information, and after transmitting (102) the demand information corresponding to the system information to the network device, the method further comprises starting the second timer,
after the first timer is started, the method further comprises: stopping the first timer in a case that the mobile communication terminal initiates a handover process, a connection establishment process, a connection re-establishment process, or a state transition process; or
after the second timer is started, the method further comprises: stopping the second timer in a case that the mobile communication terminal initiates a handover process, a connection establishment process, a connection re-establishment process, or a state transition process.

2. The method according to claim 1, wherein the satisfied trigger condition further comprises at least one of following cases:
a case where the mobile communication terminal requires at least one piece of system information;
a case where the mobile communication terminal does not require at least one piece of system information;
a case where system information transmitted by the network device does not comprise system information required by the mobile communication terminal;
a case where system information stored by the mobile communication terminal is invalid.

3. The method according to claim 1, wherein after transmitting (102) the demand information corresponding to the system information to the network device, the method further comprises:
receiving at least one of target system information or updated target system information, wherein the target system information is required by the mobile communication terminal, and is determined according to the demand information and transmitted by the network device.

4. The method according to claim 1, wherein the transmitting (102) the demand information corresponding to the system information to the network device further comprises:
transmitting the demand information corresponding to the system information to the network device through an uplink common control channel, CCCH, in a case that the mobile communication terminal is in an inactive mode or in an idle mode; or
transmitting the demand information corresponding to the system information to the network device through an uplink dedicated control channel, DCCH, in a case that the mobile communication terminal is in an connected mode.

5. The method according to claim 1, wherein the transmitting (102) the demand information corresponding to the system information to the network device when the trigger condition is satisfied further comprises:
determining whether the mobile communication terminal requires to transmit an uplink message when the trigger condition is satisfied; and
transmitting, to the network device, an uplink message carrying the demand information corresponding to the system information, in a case that the mobile communication terminal requires to transmit the uplink message, or generating a request message carrying the demand information, and transmitting the request message to the network device, in a case that the mobile communication terminal does not require to transmit the uplink message, or
wherein the transmitting (102) the demand information corresponding to the system information to the network device when the trigger condition is satisfied further comprises:
generating a request message carrying the demand information corresponding to the system information when the trigger condition is satisfied;
determining whether the mobile communication terminal requires to transmit an uplink message; and
transmitting an uplink message carrying the demand information to the network device and deleting the request message in a case that the mobile communication terminal requires to transmit the uplink message, or transmitting the request message to the network device in a case that the mobile communication terminal does not require to transmit the uplink message, wherein the uplink message is a request message for radio resource control, RRC, connection establishment; or
the uplink message is a request message for RRC connection resumption; or
the uplink message is a request message for RRC connection re-establishment.

6. A mobile communication terminal, comprising:
a determination module (401) configured to determine whether a trigger condition is satisfied; and
**characterized by** that the mobile communication terminal further comprises:
a transmission module (402) configured to transmit demand information corresponding to system information to a network device when the trigger condition is satisfied, wherein the system information is on-demand system information,
wherein the demand information comprises at least one of:
a first field for indicating first system information that is not required by the mobile communication terminal; and
a second field for indicating second system information that is required by the mobile communication terminal,
wherein in a case that the demand information comprises the second field, the demand information further comprises: a third field for indicating a validity of the second system information,
wherein the satisfied trigger condition comprises a case where a first timer configured to prohibit transmitting the demand information is in an off state, the first timer corresponds to the mobile communication terminal, and the mobile communication terminal further comprises a first starting module (403), configured to start the first timer after transmitting the demand information corresponding to the system information to the network device; or
the satisfied trigger condition comprises a case where a second timer configured to prohibit transmitting the demand information is in an off state, the second timer corresponds to the system information, and the mobile communication terminal further comprises a second starting module (404), configured to start the second timer after transmitting the demand information corresponding to the system information to the network device, and
wherein the mobile communication terminal further comprises:
a first stopping module (405) configured to, after the first timer is started, stop the first timer in a case that the mobile communication terminal initiates a handover process, a connection establishment process, a connection re-establishment process, or a state transition process; or
a second stopping module (406) configured to, after the second timer is started, stop the second timer in a case that the mobile communication terminal initiates a handover process, a connection establishment process, a connection re-establishment process, or a state transition process.

7. The mobile communication terminal according to claim 6, wherein the satisfied trigger condition further comprises at least one of following cases:
a case where the mobile communication terminal requires at least one piece of system information;
a case where the mobile communication terminal does not require at least one piece of system information;
a case where system information transmitted by the network device does not comprise system information required by the mobile communication terminal;
a case where system information stored by the mobile communication terminal is invalid.

8. The mobile communication terminal according to claim 6, wherein the mobile communication terminal further comprises:
a receipt module (407), configured to receive at least one of target system information or the target system information as updated, after transmitting the demand information corresponding to the system information to the network device, wherein the target system information is required by the mobile communication terminal, and is determined according to the demand information and transmitted by the network device.

9. The mobile communication terminal according to claim 6, wherein the transmission module (402) is further configured to:
transmit the demand information corresponding to the system information to the network device through an uplink common control channel, CCCH, in a case that the trigger condition is satisfied, and the mobile communication terminal is in an inactive mode or in an idle mode; or
transmit the demand information corresponding to the system information to the network device through an uplink dedicated control channel, DCCH, in a case that the trigger condition is satisfied, and the mobile communication terminal is in an connected mode.

10. The mobile communication terminal according to claim 6 wherein the transmission module comprises:
a first determination submodule, configured to determine whether the mobile communication terminal requires to transmit an uplink message when the trigger condition is satisfied; and
a first control submodule, configured to transmit, to a network terminal, an uplink message carrying the demand information corresponding to the system information, in a case that the mobile communication terminal requires to transmit the uplink message; or generate a request message carrying the demand information, and transmit the request message to the network device, in a case that the mobile communication terminal does not require to transmit the uplink message.

11. The mobile communication terminal according to claim 6, wherein the transmission module comprises:
a generation submodule, configured to generate a request message carrying the demand information corresponding to the system information when the trigger condition is satisfied;
a second determination submodule, configured to determine whether the mobile communication terminal requires to transmit an uplink message; and
a second control submodule, configured to transmit an uplink message carrying the demand information to the network device and delete the request message in a case that the mobile communication terminal requires to transmit the uplink message, or transmit the request message to a network side in a case that the mobile communication terminal does not require to transmit the uplink message.

12. The mobile communication terminal according to claim 10 or 11, wherein the uplink message is a request message for radio resource control, RRC, connection establishment; or
the uplink message is a request message for RRC connection resumption; or
the uplink message is a request message for RRC connection re-establishment.

13. A computer-readable storage medium, wherein a computer program is stored thereon, and the computer program is executed by a processor to implement steps of the method for obtaining system information according to any one of claims 1 to 5.

## Patentansprüche

1. Verfahren zum Gewinnen von einer Systeminformation, das auf ein mobiles Kommunikationsendgerät angewandt ist, wobei das Verfahren den folgenden Schritt aufweist:
Bestimmen (101), ob eine Triggerbedingung erfüllt wird; und
**dadurch gekennzeichnet, dass** das Verfahren ferner den folgenden Schritt aufweist:
Übertragen (102) von einer Anforderungsinformation, die der Systeminformation entspricht, an ein Netzwerkgerät, wenn die Triggerbedingung erfüllt wird, wobei die Systeminformation eine On-Demand-Systeminformation ist,
wobei die Anforderungsinformation
ein erstes Feld zum Anzeigen von einer ersten Systeminformation, die von dem mobilen Kommunikationsendgerät nicht erfordert ist; und/oder
ein zweites Feld zum Anzeigen von einer zweiten Systeminformation, die von dem mobilen Kommunikationsendgerät erfordert ist, aufweist,
wobei in einem Fall, dass die Anforderungsinformation das zweite Feld aufweist, die Anforderungsinformation ferner ein drittes Feld zum Anzeigen einer Gültigkeit der zweiten Systeminformation aufweist,
wobei die erfüllte Triggerbedingung einen Fall aufweist, dass ein erster Timer, der derart konfiguriert ist, dass er das Übertragen der Anforderungsinformation verbietet, sich in einem Off-Zustand befindet, wobei der erste Timer dem mobilen Kommunikationsendgerät entspricht, und das Verfahren nach dem Übertragen (102) der Anforderungsinformation, die der Systeminformation entspricht, an das Netzwerkgerät ferner ein Starten des ersten Timers aufweist; oder
die erfüllte Triggerbedingung einen Fall aufweist, dass ein zweiter Timer, der derart konfiguriert ist, dass er das Übertragen der Anforderungsinformation verbietet, sich in einem Off-Zustand befindet, wobei der zweite Timer der Systeminformation entspricht, und das Verfahren nach dem Übertragen (102) der Anforderungsinformation, die der Systeminformation entspricht, an das Netzwerkgerät ferner ein Starten des zweiten Timers aufweist,
nachdem der erste Timer gestartet ist, das Verfahren ferner aufweist: Stoppen des ersten Timers in einem Fall, dass das mobile Kommunikationsendgerät einen Übergabeprozess, einen Verbindungsaufbauprozess, einen Verbindungswiederaufbauprozess oder einen Zustandsübergangsprozess initiiert; oder
nachdem der zweite Timer gestartet ist, das Verfahren ferner aufweist: Stoppen des zweiten Timers in einem Fall, dass das mobile Kommunikationsendgerät einen Übergabeprozess, einen Verbindungsaufbauprozess, einen Verbindungswiederaufbauprozess oder einen Zustandsübergangsprozess initiiert.

2. Verfahren nach Anspruch 1, wobei die erfüllte Triggerbedingung ferner zumindest einen der folgenden Fälle aufweist:
einen Fall, dass das mobile Kommunikationsendgerät zumindest eine Systeminformation erfordert;
einen Fall, dass das mobile Kommunikationsendgerät zumindest eine Systeminformation nicht erfordert;
einen Fall, dass die von dem Netzwerkgerät übertragene Systeminformation keine von dem mobilen Kommunikationsendgerät erforderte Systeminformation aufweist; und
einen Fall, dass von dem mobilen Kommunikationsendgerät gespeicherte Systeminformation ungültig ist.

3. Verfahren nach Anspruch 1, wobei nach dem Übertragen (102) der Anforderungsinformation, die der Systeminformation entspricht, an das Netzwerkgerät, das Verfahren ferner aufweist:
Empfangen von einer Zielsysteminformation und/oder aktualisierter Zielsysteminformation, wobei die Zielsysteminformation von dem mobilen Kommunikationsendgerät erfordert wird, und gemäß der Anforderungsinformation bestimmt und von dem Netzwerkgerät übertragen wird.

4. Verfahren nach Anspruch 1, wobei das Übertragen (102) der Anforderungsinformation, die der Systeminformation entspricht, an das Netzwerkgerät ferner die folgenden Schritte aufweist:
Übertragen der Anforderungsinformation, die der Systeminformation entspricht, an das Netzwerkgerät über einen Uplink-Gemeinsam-Kontrollkanal, CCCH, in einem Fall, dass das mobile Kommunikationsendgerät sich in einem inaktiven Modus oder in einem Leerlaufmodus befindet, oder
Übertragen der Anforderungsinformation, die der Systeminformation entspricht, an das Netzwerkgerät über einen Uplink-Dediziert-Kontrollkanal, DCCH, in einem Fall, dass das mobile Kommunikationsendgerät sich in einem angeschlossenen Modus befindet.

5. Verfahren nach Anspruch 1, wobei, wenn die Triggerbedingung erfüllt wird, das Übertragen (102) der Anforderungsinformation, die der Systeminformation entspricht, an das Netzwerkgerät ferner die folgenden Schritte aufweist:
Bestimmen, ob das mobile Kommunikationsendgerät das Übertragen einer Uplink-Nachricht erfordert, wenn die Triggerbedingung erfüllt wird; und
Übertragen einer Uplink-Nachricht, die die der Systeminformation entsprechende Anforderungsinformation trägt, an das Netzwerkgerät in einem Fall, dass das mobile Kommunikationsendgerät das Übertragen der Uplink-Nachricht erfordert, oder Erzeugen einer Request-Nachricht, die die Anforderungsinformation trägt, und Übertragen der Request-Nachricht an das Netzwerkgerät, in einem Fall, dass das mobile Kommunikationsendgerät das Übertragen der Uplink-Nachricht nicht erfordert, oder
wobei das Übertragen (102) der Anforderungsinformation, die der Systeminformation entspricht, an das Netzwerkgerät, wenn die Triggerbedingung erfüllt wird, ferner die folgenden Schritte aufweist:
Erzeugen einer Request-Nachricht, die die der Systeminformation entsprechende Anforderungsinformation trägt, wenn die Triggerbedingung erfüllt wird;
Bestimmen, ob das mobile Kommunikationsendgerät das Übertragen einer Uplink-Nachricht erfordert; und
Übertragen einer Uplink-Nachricht, die die Anforderungsinformation trägt, an das Netzwerkgerät und Löschen der Request-Nachricht in einem Fall, dass das mobile Kommunikationsendgerät das Übertragen der Uplink-Nachricht erfordert, oder Übertragen der Request-Nachricht an das Netzwerkgerät in einem Fall, dass das mobile Kommunikationsendgerät das Übertragen der Uplink-Nachricht nicht erfordert, wobei die Uplink-Nachricht eine Request-Nachricht für einen Radio-Resource-Control-Verbindungsaufbau, RRC-Verbindungsaufbau, ist; oder
die Uplink-Nachricht eine Request-Nachricht für die RRC-Verbindungswiederaufnahme ist; oder
die Uplink-Nachricht eine Request-Nachricht für den RRC-Verbindungswiederaufbau ist.

6. Ein mobiles Kommunikationsendgerät mit
einem Bestimmungsmodul (401), das so konfiguriert ist, dass es bestimmt, ob eine Triggerbedingung erfüllt wird; und
**dadurch gekennzeichnet, dass** das mobile Kommunikationsendgerät ferner
ein Übertragungsmodul (402) aufweist, das so konfiguriert ist, dass es eine Anforderungsinformation, die einer Systeminformation entspricht, an ein Netzwerkgerät überträgt, wenn die Triggerbedingung erfüllt wird, wobei die Systeminformation eine On-Demand-Systeminformation ist,
wobei die Anforderungsinformation
ein erstes Feld zum Anzeigen einer ersten Systeminformation, die von dem mobilen Kommunikationsendgerät nicht erfordert ist; und/oder
ein zweites Feld zum Anzeigen einer zweiten Systeminformation, die von dem mobilen Kommunikationsendgerät erfordert ist, aufweist,
wobei in einem Fall, dass die Anforderungsinformation das zweite Feld aufweist, die Anforderungsinformation ferner ein drittes Feld zum Anzeigen einer Gültigkeit der zweiten Systeminformation aufweist,
wobei die erfüllte Triggerbedingung einen Fall aufweist, dass ein erster Timer, der so konfiguriert ist, dass er das Übertragen der Anforderungsinformation verbietet, sich in einem Off-Zustand befindet, wobei der erste Timer dem mobilen Kommunikationsendgerät entspricht, und das mobile Kommunikationsendgerät ferner ein erstes Startmodul (403) aufweist, das so konfiguriert ist, dass es den ersten Timer nach dem Übertragen der Anforderungsinformation, die der Systeminformation entspricht, an das Netzwerkgerät startet; oder
die erfüllte Triggerbedingung einen Fall aufweist, dass ein zweiter Timer, der so konfiguriert ist, dass er das Übertragen der Anforderungsinformation verbietet, sich in einem Off-Zustand befindet, wobei der zweite Timer der Systeminformation entspricht, und das mobile Kommunikationsendgerät ferner ein zweites Startmodul (404) aufweist, das so konfiguriert ist, dass es den zweiten Timer nach dem Übertragen der Anforderungsinformation, die der Systeminformation entspricht, an das Netzwerkgerät startet, und
wobei das mobile Kommunikationsendgerät ferner
ein erstes Stoppmodul (405), das so konfiguriert ist, dass es nach dem Starten des ersten Timers den ersten Timer in einem Fall stoppt, dass das mobile Kommunikationsendgerät einen Übergabeprozess, einen Verbindungsaufbauprozess, einen Verbindungswiederaufbauprozess oder einen Zustandsübergangsprozess initiiert; oder
ein zweites Stoppmodul (406) aufweist, das so konfiguriert ist, dass es nach dem Start des zweiten Timers den zweiten Timer in einem Fall stoppt, dass das mobile Kommunikationsendgerät einen Übergabeprozess, einen Verbindungsaufbauprozess, einen Verbindungswiederaufbauprozess oder einen Zustandsübergangsprozess initiiert.

7. Mobiles Kommunikationsendgerät nach Anspruch 6, wobei die erfüllte Triggerbedingung ferner zumindest einen der folgenden Fälle aufweist:
einen Fall, dass das mobile Kommunikationsendgerät zumindest eine Systeminformation erfordert;
einen Fall, dass das mobile Kommunikationsendgerät zumindest eine Systeminformation nicht erfordert;
einen Fall, dass die von dem Netzwerkgerät übertragenen Systeminformation keine von dem mobilen Kommunikationsendgerät erforderten Systeminformation aufweist; und
einen Fall, dass von dem mobilen Kommunikationsendgerät gespeicherte Systeminformation ungültig ist.

8. Mobiles Kommunikationsendgerät nach Anspruch 6, wobei das mobile Kommunikationsendgerät ferner
ein Empfangsmodul (407) aufweist, das so konfiguriert ist, dass es nach dem Übertragen der Anforderungsinformation, die der Systeminformation entspricht, an das Netzwerkgerät eine Zielsysteminformation und/oder eine aktualisierte Zielsysteminformation empfängt, wobei die Zielsysteminformation von dem mobilen Kommunikationsendgerät erfordert wird, und gemäß der Anforderungsinformation bestimmt und von dem Netzwerkgerät übertragen wird.

9. Mobiles Kommunikationsendgerät nach Anspruch 6, wobei das Übertragungsmodul (402) ferner so konfiguriert ist, dass es
die Anforderungsinformation, die der Systeminformation entspricht, an das Netzwerkgerät über einen Uplink-Gemeinsam-Kontrollkanal, CCCH, in einem Fall überträgt, dass die Triggerbedingung erfüllt wird, und das mobile Kommunikationsendgerät sich in einem inaktiven Modus oder in einem Leerlaufmodus befindet, oder
die Anforderungsinformation, die der Systeminformation entspricht, an das Netzwerkgerät über einen Uplink-Dediziert-Kontrollkanal, DCCH, in einem Fall überträgt, dass die Triggerbedingung erfüllt wird, und das mobile Kommunikationsendgerät sich in einem angeschlossenen Modus befindet.

10. Mobiles Kommunikationsendgerät nach Anspruch 6, wobei das Übertragungsmodul
ein erstes Bestimmungssubmodul, das so konfiguriert ist, dass es bestimmt, ob das mobile Kommunikationsendgerät ein Übertragen einer Uplink-Nachricht erfordert, wenn die Triggerbedingung erfüllt wird; und
ein erstes Kontrollsubmodul aufweist, das so konfiguriert ist, dass es in einem Fall, dass das mobile Kommunikationsendgerät das Übertragen der Uplink-Nachricht erfordert, eine Uplink-Nachricht, die die der Systeminformation entsprechende Anforderungsinformation trägt, an ein Netzwerkendgerät überträgt; oder es in einem Fall, dass das mobile Kommunikationsendgerät das Übertragen der Uplink-Nachricht nicht erfordert, eine Request-Nachricht erzeugt, die die Anforderungsinformation trägt, und die Request-Nachricht an das Netzwerkgerät überträgt.

11. Mobiles Kommunikationsendgerät nach Anspruch 6, wobei das Übertragungsmodul
ein Erzeugungssubmodul, das so konfiguriert ist, dass es eine Request-Nachricht erzeugt, die die der Systeminformation entsprechende Anforderungsinformation trägt, wenn die Triggerbedingung erfüllt wird;
ein zweites Bestimmungssubmodul, das so konfiguriert ist, dass es bestimmt, ob das mobile Kommunikationsendgerät das Übertragen einer Uplink-Nachricht erfordert; und
ein zweites Kontrollsubmodul aufweist, das so konfiguriert ist, dass es eine Uplink-Nachricht, die die Anforderungsinformation trägt, an das Netzwerkgerät überträgt und die Request-Nachricht löscht, in einem Fall, dass das mobile Kommunikationsendgerät das Übertragen der Uplink-Nachricht erfordert, oder es die Request-Nachricht an eine Netzwerkseite überträgt, in einem Fall, dass das mobile Kommunikationsendgerät das Übertragen der Uplink-Nachricht nicht erfordert.

12. Mobiles Kommunikationsendgerät nach Anspruch 10 oder 11, wobei die Uplink-Nachricht eine Request-Nachricht für einen Radio-Resource-Control-Verbindungsaufbau, RRC-Verbindungsaufbau, ist; oder
die Uplink-Nachricht eine Request-Nachricht für die RRC-Verbindungswiederaufnahme ist; oder
die Uplink-Nachricht eine Request-Nachricht für den RRC-Verbindungswiederaufbau ist.

13. Computerlesbares Speichermedium, wobei ein Computerprogramm darauf gespeichert ist, und das Computerprogramm von einem Prozessor ausgeführt ist, um Schritte des Verfahrens zum Gewinnen von einer Systeminformation gemäß einem der Ansprüche 1 bis 5 zu implementieren.

## Revendications

1. Procédé d'obtention d'informations système, appliqué à un terminal de communication mobile, dans lequel le procédé comprend :
la détermination (101) de si une condition de déclenchement est satisfaite ; et
**caractérisé en ce que** le procédé comprend en outre :
la transmission (102) d'informations de demande correspondant aux informations système à un dispositif réseau lorsque la condition de déclenchement est satisfaite, dans lequel les informations système sont des informations système à la demande,
dans lequel les informations de demande comprennent au moins l'un parmi :
un premier champ pour indiquer des premières informations système qui ne sont pas requises par le terminal de communication mobile ; et
un deuxième champ pour indiquer des secondes informations système qui sont requises par le terminal de communication mobile,
dans lequel, dans un cas où les informations de demande comprennent le deuxième champ, les informations de demande comprennent en outre : un troisième champ pour indiquer une validité des secondes informations système,
dans lequel la condition de déclenchement satisfaite comprend un cas où un premier temporisateur configuré pour interdire la transmission des informations de demande est dans un état désactivé, le premier temporisateur correspond au terminal de communication mobile, et après la transmission (102) des informations de demande correspondant aux informations système au dispositif réseau, le procédé comprend en outre le démarrage du premier temporisateur ; ou
la condition de déclenchement satisfaite comprend un cas où un second temporisateur configuré pour interdire la transmission des informations de demande est dans un état désactivé, le second temporisateur correspond aux informations système, et après la transmission (102) des informations de demande correspondant aux informations système au réseau dispositif, le procédé comprend en outre le démarrage du second temporisateur,
après le démarrage du premier temporisateur, le procédé comprend en outre : l'arrêt du premier temporisateur dans un cas où le terminal de communication mobile lance un processus de transfert intercellulaire, un processus d'établissement de connexion, un processus de rétablissement de connexion ou un processus de transition d'état ; ou
après le démarrage du second temporisateur, le procédé comprend en outre : l'arrêt du second temporisateur dans un cas où le terminal de communication mobile lance un processus de transfert intercellulaire, un processus d'établissement de connexion, un processus de rétablissement de connexion ou un processus de transition d'état.

2. Procédé selon la revendication revendication 1, dans lequel la condition de déclenchement satisfaite comprend en outre au moins l'un des cas suivants :
un cas où le terminal de communication mobile requiert au moins une information système ;
un cas où le terminal de communication mobile ne requiert pas au moins une information système ;
un cas où des informations système transmises par le dispositif réseau ne comprennent pas des informations système requises par le terminal de communication mobile ;
un cas où des informations système stockées par le terminal de communication mobile ne sont pas valides.

3. Procédé selon la revendication 1, dans lequel, après la transmission (102) des informations de demande correspondant aux informations système au dispositif réseau, le procédé comprend en outre :
la réception d'au moins les unes parmi des informations système cibles ou des informations système cibles mises à jour, dans lequel les informations système cibles sont requises par le terminal de communication mobile, et sont déterminées en fonction des informations de demande et transmises par le dispositif réseau.

4. Procédé selon la revendication 1, dans lequel la transmission (102) des informations de demande correspondant aux informations système au dispositif réseau comprend en outre :
la transmission des informations de demande correspondant aux informations système au dispositif réseau par le biais d'un canal de commande commun de liaison montante, CCCH, dans un cas où le terminal de communication mobile est en mode inactif ou en mode veille ; ou
la transmission des informations de demande correspondant aux informations système au dispositif réseau par le biais d'un canal de commande dédié de liaison montante, DCCH, dans un cas où le terminal de communication mobile est en mode connecté.

5. Procédé selon la revendication 1, dans lequel la transmission (102) des informations de demande correspondant aux informations système au dispositif réseau lorsque la condition de déclenchement est satisfaite comprend en outre :
la détermination de si le terminal de communication mobile requiert la transmission d'un message de liaison montante lorsque la condition de déclenchement est satisfaite ; et
la transmission, au dispositif réseau, d'un message de liaison montante contenant les informations de demande correspondant aux informations système, dans un cas où le terminal de communication mobile requiert la transmission du message de liaison montante, ou la génération d'un message de requête contenant les informations de demande, et la transmission du message de requête au dispositif réseau, dans un cas où le terminal de communication mobile ne requiert par la transmission du message de liaison montante, ou
dans lequel la transmission (102) des informations de demande correspondant aux informations système au dispositif réseau lorsque la condition de déclenchement est satisfaite comprend en outre :
la génération d'un message de requête contenant les informations de demande correspondant aux informations système lorsque la condition de déclenchement est satisfaite ;
la détermination de si le terminal de communication mobile requiert la transmission d'un message de liaison montante ; et
la transmission d'un message de liaison montante contenant les informations de demande au dispositif réseau et la suppression du message de requête dans un cas où le terminal de communication mobile requiert la transmission du message de liaison montante, ou la transmission du message de requête au dispositif réseau dans un cas où le terminal de communication mobile ne requiert pas la transmission du message de liaison montante, dans lequel le message de liaison montante est un message de requête d'établissement de connexion de commande de ressources radio, RRC ; ou
le message de liaison montante est un message de requête de reprise de connexion RRC ; ou
le message de liaison montante est un message de requête de rétablissement de connexion RRC.

6. Terminal de communication mobile, comprenant :
un module de détermination (401) configuré pour déterminer si une condition de déclenchement est satisfaite ; et
**caractérisé en ce que** le terminal de communication mobile comprend en outre :
un module de transmission (402) configuré pour transmettre des informations de demande correspondant à des informations système à un dispositif réseau lorsque la condition de déclenchement est satisfaite, dans lequel les informations système sont des informations système à la demande,
dans lequel les informations de demande comprennent au moins l'un parmi :
un premier champ pour indiquer des premières informations système qui ne sont pas requises par le terminal de communication mobile ; et
un deuxième champ pour indiquer des secondes informations système qui sont requises par le terminal de communication mobile,
dans lequel, dans un cas où les informations de demande comprennent le deuxième champ, les informations de demande comprennent en outre : un troisième champ pour indiquer une validité des secondes informations système,
dans lequel la condition de déclenchement satisfaite comprend un cas où un premier temporisateur configuré pour interdire la transmission des informations de demande est dans un état désactivé, le premier temporisateur correspond au terminal de communication mobile, et le terminal de communication mobile comprend en outre un premier module de démarrage (403), configuré pour démarrer le premier temporisateur après la transmission des informations de demande correspondant aux informations système au dispositif réseau ; ou
la condition de déclenchement satisfaite comprend un cas où un second temporisateur configuré pour interdire la transmission des informations de demande est dans un état désactivé, le second temporisateur correspond aux informations système, et le terminal de communication mobile comprend en outre un second module de démarrage (404), configuré pour démarrer le second temporisateur après la transmission des informations de demande correspondant aux informations système au dispositif réseau, et
dans lequel le terminal de communication mobile comprend en outre :
un premier module d'arrêt (405) configuré pour, après le démarrage du premier temporisateur, arrêter le premier temporisateur dans un cas où le terminal de communication mobile lance un processus de transfert intercellulaire, un processus d'établissement de connexion, un processus de rétablissement de connexion ou un processus de transition d'état ; ou
un second module d'arrêt (406) configuré pour, après le démarrage du second temporisateur, arrêter le second temporisateur dans un cas où le terminal de communication mobile lance un processus de transfert intercellulaire, un processus d'établissement de connexion, un processus de rétablissement de connexion ou un processus de transition d'état.

7. Terminal de communication mobile selon la revendication 6, dans lequel la condition de déclenchement satisfaite comprend en outre au moins l'un des cas suivants :
un cas où le terminal de communication mobile requiert au moins une information système ;
un cas où le terminal de communication mobile ne requiert pas au moins une information système ;
un cas où des informations système transmises par le dispositif réseau ne comprennent pas des informations système requises par le terminal de communication mobile ;
un cas où des informations système stockées par le terminal de communication mobile ne sont pas valides.

8. Terminal de communication mobile selon la revendication 6, dans lequel le terminal de communication mobile comprend en outre :
un module de réception (407), configuré pour recevoir au moins les unes parmi des informations système cibles ou les informations système cibles mises à jour, après avoir transmis les informations de demande correspondant aux informations système au dispositif réseau, dans lequel les informations système cibles sont requises par le terminal de communication mobile, et sont déterminées en fonction des informations de demande et transmises par le dispositif réseau.

9. Terminal de communication mobile selon la revendication 6, dans lequel le module de transmission (402) est en outre configuré pour :
transmettre les informations de demande correspondant aux informations système au dispositif réseau par le biais d'un canal de commande commun de liaison montante, CCCH, dans un cas où la condition de déclenchement est satisfaite, et le terminal de communication mobile est en mode inactif ou en mode veille ; ou
transmettre les informations de demande correspondant aux informations système au dispositif réseau par le biais d'un canal de commande dédié de liaison montante, DCCH, dans un cas où la condition de déclenchement est satisfaite, et le terminal de communication mobile est en mode connecté.

10. Terminal de communication mobile selon la revendication 6, dans lequel le module de transmission comprend :
un premier sous-module de détermination, configuré pour déterminer si le terminal de communication mobile requiert la transmission d'un message de liaison montante lorsque la condition de déclenchement est satisfaite ; et
un premier sous-module de commande, configuré pour transmettre, à un terminal réseau, un message de liaison montante contenant les informations de demande correspondant aux informations système, dans un cas où le terminal de communication mobile requiert la transmission du message de liaison montante ; ou générer un message de requête contenant les informations de demande, et transmettre le message de requête au dispositif réseau, dans un cas où le terminal de communication mobile ne requiert pas la transmission du message de liaison montante.

11. Terminal de communication mobile selon la revendication 6, dans lequel le module de transmission comprend :
un sous-module de génération, configuré pour générer un message de requête contenant les informations de demande correspondant aux informations système lorsque la condition de déclenchement est satisfaite ;
un second sous-module de détermination, configuré pour déterminer si le terminal de communication mobile requiert la transmission d'un message de liaison montante ; et
un second sous-module de commande, configuré pour transmettre un message de liaison montante contenant les informations de demande au dispositif réseau et supprimer le message de requête dans un cas où le terminal de communication mobile requiert la transmission du message de liaison montante, ou transmettre le message de requête à un côté réseau dans un cas où le terminal de communication mobile ne requiert pas la transmission du message de liaison montante.

12. Terminal de communication mobile selon la revendication 10 ou 11, dans lequel le message de liaison montante est un message de requête d'établissement de connexion de commande de ressources radio, RRC ; ou
le message de liaison montante est un message de requête de reprise de connexion RRC ; ou
le message de liaison montante est un message de requête de rétablissement de connexion RRC.

13. Support de stockage lisible par ordinateur, dans lequel un programme informatique est stocké sur celui-ci, et le programme informatique est exécuté par un processeur pour mettre en oeuvre les étapes du procédé d'obtention d'informations système selon l'une quelconque des revendications 1 à 5.
